# EUROPÄISCHE PATENTANMELDUNG

(11) **EP 1 903 350 A1**
(43) Veröffentlichungstag der Anmeldung: **26.03.2008**
(21) Anmeldenummer: 07018798.4
(22) Anmeldetag: 25.09.2007
(51) Int. Cl.: G01S 5/02, H04B 1/28

(54) **Integrierte Satellitenempfängerschaltung mit Steuerschaltung zur Stromversorgung externer elektronischer Bauelemente**

(30) Priorität: 25.09.2006 DE 102006045542
(71) Anmelder: ATMEL Germany GmbH, 74072 Heilbronn (DE)
(72) Erfinder: Schulz, Holger, 89155 Erbach (DE); Golberg, Hans-Joachim, 89079 Ulm (DE)
(74) Vertreter: Müller, Wolf-Christian

(57) **Zusammenfassung**

Die vorliegende Erfindung betrifft einen Satellitenhochfrequenzempfängerschaltkreis zur Aufbereitung von Satellitensignalen mit zumindest einer integrierten Ansteuerschaltung, die für ein schaltungsinternes Bereitstellen oder Abschalten einer Versorgungsspannung ausgebildet ist.

## Beschreibung

Die vorliegende Erfindung betrifft einen Satellitenhochfrequenzempfängerschaltkreis zur Aufbereitung von Satellitensignalen mit zumindest einer integrierten Ansteuerschaltung, die für ein schaltungsinternes Bereitstellen oder Abschalten einer Versorgungsspannung ausgebildet ist, eine Schaltungsanordnung zur Verarbeitung von Satellitensignalen mit einem Satellitenhochfrequenzempfängerschaltkreis zur Aufbereitung des Satellitensignals und mit einem Satellitensignalauswertschaltkreis zur Analyse des aufbereiteten Satellitensignals für die Bereitstellung eines Positions- und/oder Zeit- und/oder Geschwindigkeitssignals, sowie ein Verfahren zum Betreiben einer derartigen Schaltungsanordnung.

Eine vom Markt her bekannte Schaltungsanordnung ist für die Verarbeitung hochfrequenter elektromagnetischer Satellitensignale, die von Satelliten in einer Erdumlaufbahn abgegeben werden, eingerichtet. Die Schaltungsanordnung wird beispielsweise in einem Empfänger für ein globales Positionsbestimmungs-System (Global-Positioning-System-Receiver oder GPS-Receiver) eingesetzt. Die Aufgabe der Schaltungsanordnung besteht im Wesentlichen darin, die codierten Signale der Satelliten derart zu verarbeiten, dass Positions- und/oder Zeit- und/oder Geschwindigkeitssignale für eine Weiterverarbeitung, beispielsweise durch ein Navigationssystem, zur Verfügung gestellt werden können. Da es sich bei den Satellitensignalen typischerweise um sehr schwache Signale handelt, ist bei der Einspeisung der codierten Signale in die Schaltungsanordnung typischerweise eine Verstärkung mit einem rauscharmen Verstärker (Low Noise Amplifier / LNA) vorgesehen.

Das verstärkte Satellitensignal wird als Eingangssignal für einen Satellitenhochfrequenzempfängerschaltkreis, der auch als Radiofrequenz-Halbleiterbaustein oder RF-Chip bezeichnet wird, genutzt. In dem Satellitenhochfrequenzempfängerschaltkreis wird die bei ca. 1,5 GHz angesiedelte Frequenz des Satellitensignals typischerweise auf ca. 100 MHz reduziert. Anschließend erfolgt eine Zwischenfrequenzfilterung und eine Verstärkung in einer einstellbaren Verstärkerstufe, In einem abschließenden Schritt wird die Frequenz des Signals erneut reduziert und es findet eine Digitalisierung des Signals statt. Der Satellitenhochfrequenzempfängerschaltkreis gibt das digitalisierte Satelliten signal an den Satellitensignalauswertschaltkreis weiter, in der aus dem aufbereiteten Satellitensignal mit Hilfe eines von einem externen Oszillator bereitgestellten Taktsignals Geschwindigkeits- und/oder Zeit- und/oder Positionsangaben errechnet werden. Diese Angaben werden dann zur weiteren Verarbeitung an eine Recheneinheit des GPS-Systems übergeben.

Die bekannte Schaltungseinrichtung ist so ausgelegt, dass der Satellitenhochfrequenzempfängerschaltkreis und der Satellftensigrialauswertschaltkreis durch ein internes oder externes Aktivierungssignal in einen Betriebszustand oder in einen Ruhezustand versetzt werden können. Im Betriebszustand kann die Signalaufbereitung und Signalauswertung der Satellitensignale vorgenommen werden, dazu wird eine erhebliche Menge an elektrischer Energie benötigt, die bei mobilen GPS-Systemen typischerweise aus einem endlichen Energiespeicher, beispielsweise einer Batterie oder einem Akkumulator, bereitgestellt wird. Hingegen findet im Ruhezustand keine Signalaufbereitung oder Signalauswertung statt, wodurch der elektrische Leistungsbedarf des Satellitenhochfrequenzempfängerschaltkreises und des Satellitensignalauswertschaltkreises erheblich reduziert werden kann und somit die Kapazität des Energiespeichers geschont wird. Für eine weitere Reduzierung des elektrischen Energiebedarfs der Schaltungseinrichfiung ist eine Abschaltung der Energieversorgung weiterer Bauelemente der Schaltungseinrichtung vorgesehen. Dazu weist die bekannte Schaltungseinrichtung eine aus diskreten Elektronikbauteilen aufgebaute Versorgungsschaltung auf, die von dem Aktivierungssignal angesteuert wird und die eine Versorgungsspannung für die weiteren Bauelemente der Schaltungseinrichtung in Abhängigkeit eines Signalpegels des Aktivierungssignals bereitstellen bzw. abschalten kann.

Aufgabe der vorliegenden Erfindung ist es, einen Satellitenhochfrequenzempfängerschaltkreis, eine Schaltungseinrichtung sowie ein Verfahren zum Betreiben einer solchen Schaltungseinrichtung bereitzustellen, die eine vereinfachte Spannungsversorgung diskreter Bauelemente ermöglichen.

Diese Aufgabe wird gemäß einem ersten Aspekt durch einen Satellitenhochfrequenzempfängerschaltkreis mit den Merkmalen des Patentanspruches 1 gelöst. Günstige Ausgestaltungsformen sind Gegenstand von Unteransprüchen.

Gemäß dem ersten Aspekt der Erfindung wird ein Satellitenhochfrequenzempfängerschaltkreis zur Aufbereitung von Satellitensignalen mit zumindest einer integrierten Ansteuerschaltung, die für ein schaltungsinternes Bereitstellen oder Abschalten einer Versorgungsspannung ausgebildet ist, vorgeschlagen, wobei zumindest ein integrierter Versorgungsanschluss vorgesehen ist, der für ein Bereitstellen der Versorgungsspannung an zumindest ein externes elektronisches Bauelement ausgebildet ist. Der Satellitenhochfrequenzempfängerschaltkreis weist die interne Ansteuerschaltung auf, die in Abhängigkeit eines internen oder externen Aktivierungssignals eine interne Versorgungsspannung zur Verfügung stellt und damit einen Betrieb des Satellitenhochfrequenzernpfängerschaltkreises ermöglicht. Erfindungsgemäß weist der Satellitenhochfrequenzempfängerschaltkreis einen integrierten, also als Bestandteil der als integrierten Schaltkreis auf einem Halbleiterbaustein verwirklichten Schaltung verwirklichten Versorgungsanschluss auf. Dieser ist in der Lage, elektrische Energie für ein diskretes, also abseits des Satellitenhochfrequenzernpfängerschaltkreises verwirklichtes Bauteil zur Verfügung zu stellen. lm Unterschied zu bekannten Satellitenhochfrequenzempfängerschaltkreisen kann somit nicht nur ein logisches Steuersignal zum Ansteuern einer aus diskreten Elektronikbauteilen aufgebauten Versorgungsschaltung für das externe Bauteils zur Verfügung gestellt werden, sondern mit dem Versorgungsanschluss ist eine unmittelbare Versorgung des externen, diskreten Bauteils mit elektrischer Energie möglich. Damit kann eine erhebliche Vereinfachung eines Schaltungsaufbaus, in dem der Satellitenhochfrequenzempfängerschaltkreis vorgesehen ist, ermöglicht werden, da auf weitere, diskrete Elektronikbauteile zum Ein- und/oder Ausschalten der Versorgungsspannung für die externen Bauteile verzichtet werden kann.

In weiterer Ausgestaltung der Erfindung ist vorgesehen, dass der integrierten Ansteuerschaltung ein Aktivierungssignaianschiuss zugeordnet ist, der für eine Übertragung eines externen Aktivierungssignals an die Ansteuerschaltung ausgebildet ist. Damit wird die Einspeisung eines externen Aktivierungssignals in den Satellitenhochfrequenzempfängerschaltkreis ermöglicht. Dieser benötigt somit keine eigene, interne Schaltung, um festzustellen, wann ein Ein- oder Ausschalten der Versorgungsspannung vorgenommen werden muss, um Energie zu sparen und somit die Kapazität des Energiespeichers zu schonen. Vielmehr kann durch das externe Aktivierungssignal sowohl das Ein- und Ausschalten der internen Spannungsversorgung als auch das Ein- und Ausschalten der Versorgungsspannung am Versorgungsanschluss verwirklicht werden.

In weiterer Ausgestaltung der Erfindung ist vorgesehen, dass die Ansteuerschaltung für die interne und externe Bereitstellung der Versorgungsspannung in Abhängigkeit von dem Aktivierungssignal ausgebildet ist. Dies ermöglicht eine gemeinsame Nutzung wesentlicher Teile der Ansteuerungsschaltung sowohl für die interne Bereitstellung der Versorgungsspannung als auch für die Bereitstellung der Versorgungsspannung am Versorgungsanschluss. Durch diese gemeinsame Nutzung wird es ermöglicht, die Gestaltung bzw. das Design des Satellitenhochfrequenzempfängerschaltkreises trotz des zusätzlichen Versorgungsanschlusses einfach zu halten und die Fläche ggf. nur geringfügig zu vergrößern.

Gemäß einem zweiten Aspekt der Erfindung wird eine Schaltungseinrichtung der eingangs genannten Art bereitgestellt, bei der der Satellitenhochfrequenzempfängerschaltkreis und/oder der Satellitensignalauswertschaltkreis zumindest einen integrierten Versorgungsanschluss aufweisen, der für die Bereitstellung zumindest einer Versorgungsspannung ausgebildet ist, um die Versorgung zumindest eines in der Schaltungsanordnung vorgesehenen, diskret ausgeführten elektronischen Bauelements zu ermöglichen. Der integrierte Versorgungsanschluss ist derart ausgebildet, dass er die elektrische Leistung für die Versorgung eines oder mehrerer in der Schaltungsanordnung vorgesehener diskreter Bauelemente unmittelbar und ohne Zwischenschaltung weiterer Elektronikbauteile bereitstellen kann. Der Versorgungsanschluss ist auf dem als Halbleiterbaustein ausgeführten Satellitenhochfrequenzempfängerschaltkreis oder auf dem als Halbleiterbaustein ausgeführten Satellitensignalauswertschaltkreis als Anschlussfläche oder als Mehrzahl von Anschlussflächen verwirklicht. Damit kann auf die Bereitstellung einer aus diskreten Elektronikbauteilen aufgebauten Versorgungsschaltung zur Versorgung der diskreten Bauteile verzichtet werden. Dies ermöglicht eine Reduktion des Platzbedarfs für die Schaltungseinrichtung und gewährleistet eine vereinfachte Aufbauweise für die Schaltungsanordnung. Dies gilt insbesondere dann, wenn die Halbleiterbausteine des Satellitenhochfrequenzempfängerschaltkreises und des Satellitensignalauswertschaltkreises als Multi-Chip-Modul flächig miteinander verbunden werden und in einem gemeinsamen Gehäuse untergebracht werden.

In Ausgestaltung der Erfindung ist vorgesehen, dass dem Versorgungsanschluss eine in dem Satellitenhochfrequenzempfängerschaltkreis und/oder in dem Satellitensignalauswertschaltkreis integrierte Ansteuerschaltung zugeordnet ist. Der Ansteuerungsschaltung kommt die Aufgabe zu, die Versorgungsspannung für das diskrete Bauelement in Abhängigkeit des Aktivierungssignals an dem Versorgungsanschluss bereitzustellen. Dazu kann der Halbleiterbaustein des Satellitenhochfrequenzempfängerschaltkreises oder des Satellitensignalauswertschaltkreises mit einem Transistor oder einer Transistoranordnung, die vorzugsweise aus PMOS-Transistoren oder NMOS-Transistoren aufgebaut ist, versehen sein. Zur Ansteuerung des Transistors oder der Transistoranordnung kann ein Schwellwertschalter, der insbesondere als Schmitt-Trigger ausgeführt ist, vorgesehen werden. Um das Aktivierungssignal, das bei Überschreiten einer vom Schmitt-Trigger vorgegebenen Schwellspannung an den Transistor oder die Transistoranordnung weitergeleitet wird, vorteilhaft auf die Anforderungen des Transistors oder der Transistoranordnung anpassen zu können, ist zumindest ein Inverter oder eine Inverteranordnung zwischen den Schwellwertschalter und den Transistor bzw. die Transistoranordnung geschaltet.

In weiterer Ausgestaltung der Erfindung ist vorgesehen, dass das zumindest eine elektronische Bauelement als rauscharmer Verstärker oder als temperaturkompensierter Quarzoszillator ausgebildet ist und frei von einer internen Ansteuerungsschaltung zur Bereitstellung einer Versorgungsspannung ist. Derartige diskrete Bauelemente sind typischerweise nicht mit einer eigenen, integrierten Ansteuerungsschaltung zur Bereitstellung einer Versorgungsspannung versehen. Eine interne Ansteuerungsschaltung bringt das Risiko einer Übertragung von Störungen mit sich, die die Signalqualität eines rauscharmen Verstärkers oder die Qualität eines Taktsignals des Quarzoszillators beeinträchtigen können. Derartige diskrete Bauelemente benötigen somit eine externe Ansteuerungsschaltung, wenn ihre Versorgungsspannung in einem Ruhezustand abgeschaltet werden soll, ohne dass zu diesem Zweck die Versorgungsspannung für die gesamte Schaltungsanordnung abgeschaltet werden muss.

In weiterer Ausgestaltung der Erfindung ist vorgesehen, dass die Ansteuerschaltung für die Bereitstellung einer Versorgungsspannung ausgebildet ist, die einen Spannungspegel aufweist, der von einem Spannungspegel des Aktivierungssignals abweicht. Bei dem Aktivierungssignal handelt es sich um ein logisches Signal, bei dem weder der Spannungspegel noch die zur Verfügung zu stellende Stromstärke geeignet sind, eine unmittelbare Versorgung des diskreten Bauelements zu gewährleisten. Mit Hilfe der Ansteuerungsschaltung kann bei Vorliegen des Aktivierungssignals eine Versorgungsspannung geschaltet werden, deren Spannungspegel erheblich höher liegt als der Spannungspegel des Aktivierungssignals. Ein exemplarischer Werte für das Aktivierungssignal liegt bei 1,8 Volt, ein exemplarischer Wert für die Versorgungsspannung liegt bei 3,3 Volt.

In weiterer Ausgestaltung der Erfindung ist vorgesehen, dass die Ansteuerungsschaltung sowohl für die Bereitstellung der Versorgungsspannung an dem integrierten Versorgungsanschluss als auch für die Bereitstellung einer, insbesondere mit der Versorgungsspannung identischen, internen Betriebsspannung für den Satellitenhochfrequenzempfängerschaltkreis oder den Satellitensignalauswertschaltkreis ausgebildet ist. Durch die erfindungsgemäße Integration der Ansteuerungsschaltung in den Satellitenhochfrequenzempfängerschaltkreis oder in den Satellitensignalauswertschaltkreis kann eine Nutzung der für die Bereitstellung der internen Betriebsspannung notwendigen Schaltungsteile auf dem Halbleiterbaustein auch für die Bereitstellung der Versorgungsspannung am Versorgungsanschluss vorgenommen werden. Durch diese Doppelnutzung der entsprechenden Schaltungsteile ergibt sich eine Vereinfachung und eine besonders kompakte Gestaltung des entsprechenden Halbleiterbausteins, die ggf, auch zu einer Kostenersparnis bei der Herstellung führt.

Gemäß einem weiteren Aspekt der Erfindung wird ein Verfahren zum Betreiben einer Schaltungsanordnung nach einem der Ansprüche 4 bis 8 vorgeschlagen, das die folgenden Schritte aufweist:
- Erzeugen eines Aktivierungssignals durch den Satellitensignalauswertschaltkreis,
- Bereitstellen des Aktivierungssignals an den Satellitenhochfrequenzempfängerschaltkreis,
- Freigeben der Versorgungsspannung für den Satellitenhochfrequenzempfängerschaltkreis in Abhängigkeit des Aktivierungssignals durch die Ansteuerschaltung,
- Freigeben der Versorgungsspannung an den integrierten Versorgungsanschluss in Abhängigkeit des Aktivierungssignals durch die Ansteuerschaltung.

Weitere Vorteile und Merkmale der Erfindung ergeben sich aus den Ansprüchen sowie aus der nachfolgenden Beschreibung eines bevorzugten Ausführungsbeispiels, das anhand der Zeichnungen dargestellt ist. Dabei zeigt:
- Fig. 1: eine schematische Darstellung einer Schaltungsanordnung, die für eine Verwendung in einem Satellitennavigationssystem vorgesehen ist,
- Fig. 2: eine detaillierte Darstellung der Schaltungsanordnung gemäß der Fig. 1,
- Fig. 3: eine exemplarische Ausführungsform einer Ansteuerungsschaltung zur Bereitstellung einer Versorgungsspannung.

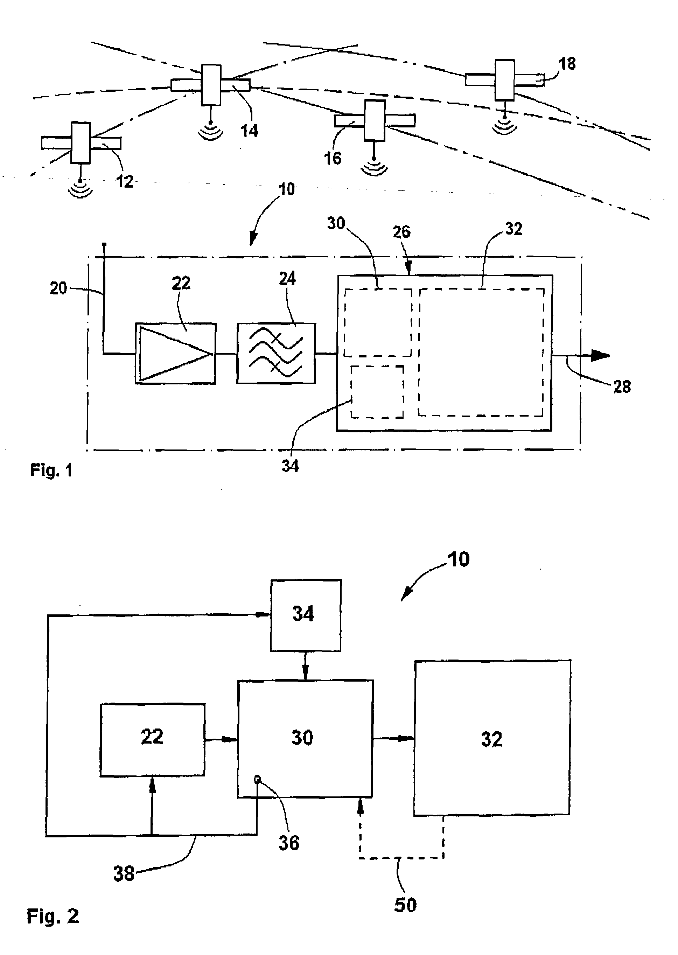

In der Figur 1 ist eine GPS-Receivereinheit 10 schematisch dargestellt, die für den Empfang von Signalen mehrerer Satelliten 12 bis 18 vorgesehen ist, die sich auf unterschiedlichen Erdumlaufbahnen befinden. Die Satelliten 12 bis 18 geben voneinander unterscheidbare, codierte Signale ab, die typischerweise mit einer Frequenz von 1,575 GHz ausgesendet werden und die von einer Antenne 20 der GPS-Receivereinheit 10 empfangen werden können. Die Antenne 20 ist mit einem rauscharmen Verstärker 22 (Low Noise Amplifier / LNA) verbunden, der die schwachen Signale der Satelliten 12 bis 18 verstärkt und der derart eingerichtet ist, dass er ein Signal-Rauschverhältnis des Satellitensignals nicht oder nur geringfügig verschlechtert. Das verstärkte Satellitensignal wird mit Hilfe eines Oberflächenwellenfilters 24 (Surface Acoustic Wave Filter oder SAW-Filter), der als Bandpassfilter wirkt, gefiltert und anschließend als Eingangssignal für eine als Receiver-Multlchipmodul 26 ausgeführte Schaltungsanordnung weitergeleitet.

Das Recelver-Multichipmodul 26 weist einen als Satellitenhochfrequenzempfängerschaltkreis zur Aufbereitung des Satellitensignals ausgeführten Radiofrequenz-Halbleiterbaustein oder RF-Chip 30 auf, der auch als GPS-Frontend-IC bezeichnet wird. Auf dem Receiver-Multichipmodul 26 ist weiterhin ein als Satellitensignalauswertschaltkreis zur Analyse des aufbereiteten Satellitensignals für die Bereitstellung eines Positions- und/oder Zeit- und/oder Geschwindigkeitssignals ausgeführtes digitales Halbleiterbauteil vorgesehen, das auch als Digital-Chip 32 oder als GPS-Baseband-IC bezeichnet wird und das die Weiterverarbeitung des aufbereiteten Satellitensignals vornimmt.

Nach der Verarbeitung in dem Digital-Chip 32 wird ein Ausgangssignal 28 von dem Receiver-Muitichipmodul 26 bereitgestellt, das für eine weitere Verarbeitung durch nicht dargestellte elektronische Schaltungen vorgesehen sein kann. Das Ausgangssignal 28 kann insbesondere Positions- und/oder Zeit- und/oder Geschwindigkeitsinformationen enthalten, die mit Hilfe der GPS-Receivereinheit 10 aus den unterschiedlichen Signalen der Satelliten 12 bis 18 gewonnen werden.

Wie in der Fig. 2 näher dargestellt, ist bei der GPS-Receivereinheit 10 eine Signalübertragung von dem LNA 22 zum RF-Chip 30 und von dort aus zum Digital-Chip 32 vorgesehen. Von einem temperaturkompensierten Quarzoszillator oder TCXO 34 findet ebenfalls eine Signalübertragung an den RF-Chip 32 statt. Weiterhin ist eine Übertragung eines Aktivierungssignals über eine Aktivierungsleitung 50 vom Digital-Chip 32 an einen nicht näher bezeichneten Aktivierungssignalanschluss des RF-Chips 30 vorgesehen. Der RF-Chip weist einen Versorgungsanschluss 36 auf, der für die Bereitstellung einer Versorgungsspannung vorgesehen ist. Von dem Versorgungsanschluss 36 verläuft eine Versorgungsleitung 38 zu dem LNA 22 und zu dem TCXO 34. Mit der Versorgungsleitung 38 wird die vom Versorgungsanschluss 36 bereitgestellte Versorgungsspannung unmittelbar und ohne zwischengeschaltete Elektronikbauteile an den LNA 22 und den TCXO 34 bereitgestellt.

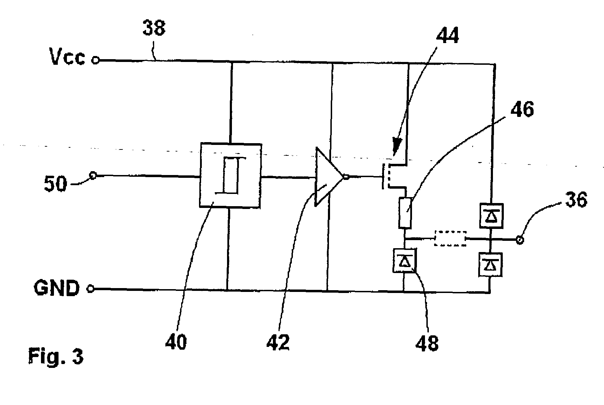

Die in Fig. 3 schematisch dargestellte Ansteuerungsschaltung ist ein Ausschnitt aus einer weit komplexeren Schaltung, die auf dem als Halbleiterbaustein ausgeführten RF-Chip 30 verwirklicht ist. Die Ansteuerungsschaltung umfasst einen als Schmitt-Trigger 40 ausgeführten Schwellwertschalter und einen nachgeschalteten, exemplarisch dargestellten Inverter 42, Diese Schaltungsteile sind ohnehin auf dem RF-Chip 30 vorgesehen, um eine Versorgung der nicht näher dargestellten Schaltungsteile des RF-Chips 30 mit der Versorgungsspannung Vcc zu ermöglichen. An den Schmitt-Trigger 40 kann über die Aktivierungsleitung 50 ein typischerweise als logisches "High"-Signal vorliegendes Aktivierungssignal bereitgestellt werden. Der Schmitt-Trigger 40 leitet nach Überschreiten einer vorgebbaren Schaltschwelle das Aktivierungssignal auf den Inverter 42. Der inverter 42 gibt ein invertiertes Aktivierungssignal an einen nachgeschalteten PMOS-Transistor 44 aus, der somit in die Lage versetzt wird, die Versorgungsspannung Vcc an dem Versorgungsanschluss 36 bereitzustellen. Dem PMOS-Transistor 44 sind als Kurzschlussschutz und als ESD-Schutz ein Schutzwiderstand 46 und eine Schutzdiode 48 zugeordnet, die eine Zerstörung der Ansteuerungsschaltung bei falschem Anschließen einer äußeren Spannung oder bei elektrostatischen Entladungen (ESD) verhindern sollen. Zwischen dem Versorgungsanschluss 36 und dem damit verbundenen PMOS-Transistor 44 sind zwei weitere, nicht näher bezeichnete Schutzdioden vorgesehen, die zur Ableitung von elektrostatischen Entladungen vorgesehen sind und die mit dem Massepotential GND bzw. mit der Versorgungsspannung Vcc gekoppelt sind. Ein nicht näher bezeichneter Leitungswiderstand zwischen dem Versorgungsanschluss 36 und dem Schutzwiderstand 46 bzw. der Schutzdiode 48 ist gestrichelt eingezeichnet.

### Bezeichnung

- 10: GPS-Receivereinheit
- 12: Satellit 1
- 14: Satellit 2
- 16: Satellit 3
- 18: Satellit 4
- 20: Antenne
- 22: LNA
- 24: SAW-Filter
- 26: Receiver-Mulüchipmodul
- 28: Ausgangssignal
- 30: RF-Chip
- 32: Digital-Chip
- 34: TCXO
- 36: Versorgungsanschluss
- 38: Versorgungsleitung
- 40: Schmitt-Trigger
- 42: inverter
- 44: PMOS-Transistor
- 46: Schutzwiderstand
- 48: Schutzdiode
- 50: Aktivierungsleitung

## Patentansprüche

1. Satellitenhochfrequenzempfängerschaltkreis zur Aufbereitung von Satellitensignalen mit zumindest einer integrierten Ansteuerschaltung (40, 42, 44), die für ein schaltungsinternes Bereitstellen oder Abschalten einer Versorgungsspannung ausgebildet ist, **dadurch gekennzeichnet, dass** zumindest ein integrierter Versorgungsanschluss (36) vorgesehen ist, der für ein Bereitstellen der Versorgungsspannung an zumindest ein externes elektronisches Bauelements (22. 34) ausgebildet ist.

2. Satellitenhochfrequenzempfängerschaltkreis nach Anspruch 2, **dadurch gekennzeichnet, dass** der integrierten Ansteuerschaltung (40, 42, 44) ein Aktivierungssignalanschluss zugeordnet ist, der für eine Übertragung eines externen Aktivierungssignals an die Ansteuerschaltung (40, 42, 44) ausgebildet ist.

3. Satellitenhochfrequenzempfängerschaltkreis nach Anspruch 2, **dadurch gekennzeichnet, dass** die Ansteuerschaltung (40, 42, 44) für die interne und externe Bereitstellung der Versorgungsspannung in Abhängigkeit von dem Aktivierungssignal ausgebildet ist.

4. Schaltungsanordnung (10) zur Verarbeitung von Satellitensignalen, mit einem Satellitenhochfrequenzempfängerschaltkreis (30) zur Aufbereitung des Satellitensignals und mit einem Satellitensignalauswertschaltkreis (32) zur Analyse des aufbereiteten Satellitensignals für die Bereitstellung eines Positions- und/oder Zeit- und/oder Geschwindigkeitssignals, **dadurch gekennzeichnet, dass** der Satellitenhochfrequenzempfängerschaltkreis (30) und/oder der Satellitensignalauswertschaltkreis (32) zumindest einen integrierten Versorgungsanschluss (36) aufweisen, der für die Bereitstellung zumindest einer Versorgungsspannung ausgebildet ist, um die Versorgung zumindest eines in der Schaltungsanordnung vorgesehenen, diskret ausgeführten elektronischen Bauelements (22, 34) zu ermöglichen.

5. Schaltungsanordnung nach Anspruch 4, **dadurch gekennzeichnet, dass** dem Versorgungsanschluss (36) eine in dem Satellitenhochfrequenzempfängerschaltkreis (30) und/oder in dem Satellitensignalauswertschaltkreis (32) integrierte Ansteuerschaltung (40, 42, 44) zugeordnet ist.

6. Schaltungsanordnung nach Anspruch 4 oder 5, **dadurch gekennzeichnet, dass** das zumindest eine elektronische Bauelement (22, 34) als rauscharmer Verstärker oder als temperaturkompensierter Quarzoszillator ausgebildet ist und frei von einer internen Ansteuerungsschaltung zur Bereitstellung einer Versorgungsspannung ist.

7. Schaltungsanordnung nach Anspruch 5, **dadurch gekennzeichnet, dass** die Ansteuerschaltung (40, 42, 44) für die Bereitstellung einer Versorgungsspannung ausgebildet ist, die einen Spannungspegel aufweist, der von einem Spannungspegel des Aktivierungssignals abweicht.

8. Schaltungsanordnung nach Anspruch 5 oder 7, **dadurch gekennzeichnet, dass** die Ansteuerungsschaltung (40, 42, 44) sowohl für die Bereitstellung der Versorgungsspannung an dem integrierten Versorgungsanschluss (36) als auch für die Bereitstellung einer, insbesondere mit der Versorgungsspannung identischen, internen Betriebsspannung für den Satellitenhochfrequenzempfängerschaltkreis (30) oder den Satellitensignalauswertschaltkreis (32) ausgebildet ist.

9. Verfahren zum Betreiben einer Schaltungsanordnung nach einem der Ansprüche 1 bis 6, mit den Schritten:
Erzeugen eines Aktivierungssignals durch den Satellitensignalauswertschaltkreis (32),
Bereitstellen des Aktivierungssignals an den Satellitenhochfrequenzempfängerschaltkreis (30),
Freigeben der Versorgungsspannung für den Satellitenhochfrequenzempfängerschaltkreis (30) in Abhängigkeit des Aktivierungssignals durch die Ansteuerschaltung (40, 42, 44),
Freigeben der Versorgungsspannung an den integrierten Versorgutigsanschluss (36) in Abhängigkeit des Aktivierungssignals durch die Ansteuerschaltung (40, 42, 44).
